(19) **Europäisches Patentamt**

**European Patent Office**

**Office européen des brevets**

(11) **EP 1 394 956 A2**

(12) **EUROPEAN PATENT APPLICATION**

(43) Date of publication:
**03.03.2004 Bulletin 2004/10**

(51) Int Cl.$^7$: **H04B 1/16**

(21) Application number: **03254914.9**

(22) Date of filing: **07.08.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **31.08.2002 GB 0220291**

(71) Applicant: **Pace Micro Technology PLC
Shipley, West Yorkshire BD18 3LF (GB)**

(72) Inventors:
- **Lambert, Roger
  Shipley, BD18 3LF (GB)**
- **Johnson, Jeffrey
  Shipley, BD18 3LF (GB)**

(74) Representative: **Wood, Graham
  Bailey Walsh & Co,
  5 York Place
  Leeds LS1 2SD (GB)**

(54) **Power saving facility for radio receiver**

(57) There is provided a system, electrical apparatus and method of use thereof for reducing the electrical power consumed by the electrical apparatus. The electrical apparatus receives broadcast data and includes data receiving means with an antenna and low noise block (LNB) connected to a broadcast data receiver (BDR) for processing the received data. The LNB operates at a predefined voltage level but in a standby mode the voltage level is reduced in increments until a predefined signal quality level is achieved. The apparatus include detection means for detecting when the received signal quality level is reached, whereupon the voltage level reached at that instant is maintained.

**Description**

The invention to which this application relates is the provision of a system, electrical apparatus and method of use thereof to allow the reduction in the electrical power consumed by the electrical apparatus.

The electrical apparatus to which the invention is particularly directed is to a satellite television system whereby data which is broadcast from a remote location is received at numerous premises for subsequent processing and the generation of television, and typically other, functions which are selectable by the user at the premises. With satellite television systems the apparatus at each premises typically includes a satellite antenna mounted externally of the premises, said antenna including at least one Low Noise Block (LNB) and receiving horn. The data which is received is then transferred via cable connection to a broadcast data receiver (BDR) (also known as a Set Top Box) mounted within the premises and provided as part of or connected to a display screen and speakers. The BDR processes the received data and generates audio, video and auxiliary data in a format which is acceptable to the user.

A problem with this type of apparatus is that there is a tendency or indeed can be a requirement to have the apparatus, in what is known as a standby mode in which the apparatus is not functioning to generate any output to the user but there is still power supplied to and consumed by the apparatus. The condition can further be referred to as Active Standby in which the apparatus is capable of receiving data.

In order to meet concerns about unnecessary or excessive energy consumption there is increasing pressure on manufacturers to look at energy consumption and a recent European Community Directive has stated that in the active Standby mode the apparatus energy consumption should not exceed 9 Watts. One significant power usage component is the LNB which in itself utilises 3 Watts of power.

The aim of the present invention is to reduce the energy used by the LNB thereby reducing the overall apparatus energy consumption and allow the recently issued directives to be met.

In a first aspect of the invention there is provided electrical apparatus for receiving broadcast data, said apparatus including data receiving means with at least an antenna and low noise block (LNB) connected to a broadcast data receiver (BDR) for processing the received data, said LNB provided to operate at a predefined voltage level and characterised in that the apparatus includes detection means for detecting the received signal quality level as the voltage level to the LNB is reduced until the signal reaches a pre-defined quality level whereupon the voltage level reached at that instant is maintained.

If, when reducing the voltage level, the signal quality falls below the predefined quality level, the voltage is increased until the quality level is reached and the voltage level is maintained.

It is envisaged that the normal use of this system will be when apparatus is in the standby or active standby modes but it should be appreciated that it can be used in any mode where the signal quality levels can be monitored, although in "Live" mode the broadcaster's permission may be required.

Typically the LNB will operate in the vertical polarity mode and the measured value of signal quality level can include allowance for hysterisis.

In one embodiment the normal operating voltage level of the LNB when in a "Live" mode is 13 Volts.

Typically the apparatus is in Active Standby mode when the voltage reduction is performed and the signal level of received data is required to be detected. Preferably the voltage level is reduced in a graduated manner such as by predefined incremental steps.

While the predefined lowest signal quality level will be standard from premises to premises, the voltage level at which this lowest signal quality level is reached will typically vary from premises to premises due to the effect of the location on the received signal quality and hence the signal quality is measured at each premises and the voltage level set will be related to that premises. However an estimated average saving is in the region of 1.25 Watts or 14% of the required power level of 9 Watts.

In one embodiment the voltage level is reduced using a programmable LNB voltage generator. The LNB operates as a constant current sink and hence the power consumed by the LNB will fall in substantially direct proportion to the reduction in voltage.

Typically the received signal quality detection means are provided as an integral part of the BDR to which the LNB is connected.

In a further aspect of the invention there is provide a method of reducing the power consumption of a low noise block (LNB) provided as part of a broadcast data receiving system, said method including the steps of reducing the voltage supply to the LNB in a graduated manner and, as the voltage is decreased, detecting the quality level of the signal received from the LNB, continuing to decrease the voltage until a predefined signal quality level is reached, whereupon the voltage level is maintained.

In one embodiment if, during the reduction of the voltage level, the signal quality level falls below the predefined value, the voltage is increased until the predefined level is reached whereupon the voltage level is maintained.

Typically the voltage level is maintained until the mode of operation of the apparatus is changed, typically by user intervention.

A specific embodiment of the invention is now described with reference to the accompanying diagram wherein the diagram illustrates in a schematic manner apparatus according to one embodiment of the invention.

The apparatus includes a satellite antenna 2 with LNB 4 mounted externally of premises 6. The LNB is connected via cable 8 to the BDR 10 which in turn is connected to a television set 12 having speakers and display screen. In operation, data broadcast from a remote location is received via the antenna and LNB and passed as a signal, at a required signal quality level for successful operation of the BDR, to the BDR where the same is decoded and processed into video and audio data for viewing and listening via the television set.

The apparatus can typically be in any of three user selected modes, Standby, Active Standby where data can be received and processed and Live where the data is received, processed and generated for the user. The need to reduce power consumption, especially when the apparatus is in the Standby modes, is increasing and so this is achieved in one embodiment of the invention as now described.

One of the major power consumers in the apparatus is the LNB which typically consumes up to 3 Watts. The LNB is typically operated in vertical polarity at the conventional voltage of 13 Volts rather than the Horizontal polarity at a Voltage of 18V. While the voltages specified for Horizontal and Vertical polarity are typically 13/18V respectively the LNB can run from 5 Volts or 3V3 Volts.

In operation the LNB acts as a constant current sink thus if the voltage can be decreased the power consumption will also be decreased. In accordance with the invention the voltage level to the LNB is reduced using a programmable LNB voltage generator with the decrease typically in steps until the tuner, decoder, main processor of the BDR or other detection means indicates that the signal received from the LNB has reached a level below the predefined signal quality level. The detection means then causes the voltage level to the LNB to be increased until the predefined signal quality level is reached whereupon the voltage is maintained.

In one specific embodiment, an LNB that consumes 150mA@13V will usually contain a linear regulator such as an LM7805. By lowering the input voltage to 8 V rather than the conventional 13 V, the regulator still operates within its predefined parameters and the current remains constant at 150mA. Thus a saving of power consumption of

$$(13V-8V) \times 0.150 = 0.75W \text{ or } 1.1W$$

ac input power is achieved

The present invention therefore provides significant power usage reductions in one component of the apparatus as described which allows the apparatus as a whole to meet the requirements for reduced power consumption.

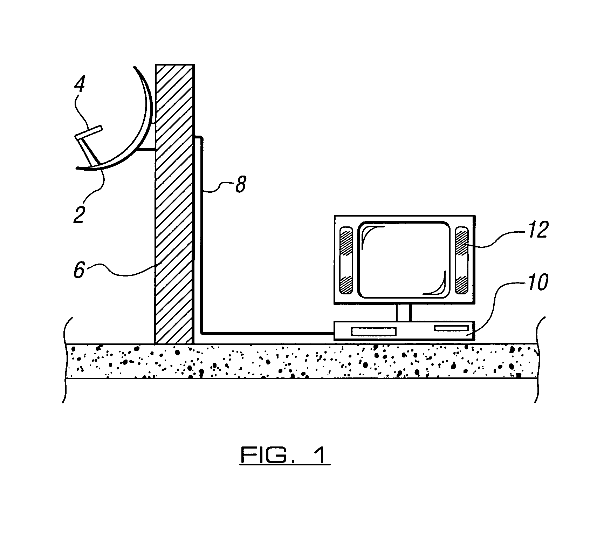

**Claims**

1. Electrical apparatus for receiving broadcast data, said apparatus including data receiving means with at least an antenna and low noise block (LNB) connected to a broadcast data receiver (BDR) for processing the received data, said LNB provided to operate at a predefined voltage level and **characterised in that** the apparatus includes detection means for detecting the received signal quality level as the voltage level to the LNB is reduced until the signal reaches a pre-defined quality level whereupon the voltage level reached at that instant is maintained.

2. Electrical apparatus according to claim 1 **characterised in that** if, when the voltage level is being reduced, the signal quality falls below the predefined quality level, the voltage level is increased until the pre-defined quality level is reached whereupon the voltage level is maintained.

3. Electrical apparatus according to claim 1 **characterised in that** the detection means and adjustment of the voltage levels to the LNB are utilized when the electrical apparatus is in a standby and/or active standby mode.

4. Electrical apparatus according to claim 1 **characterised in that** the LNB operates in a vertical polarity mode.

5. Electrical apparatus according to claim 1 **characterised in that** the voltage level to the LNB is reduced in pre-defined increments.

6. Electrical apparatus according to claim 1 **characterised in that** the voltage level to the LNB is reduced using a programmable LNB voltage generator.

7. Electrical apparatus according to claim 1 **characterised in that** the power consumed by the LNB will fall in substantially direct proportion to the reduction in voltage.

8. Electrical apparatus according to claim 1 **characterised in that** the signal quality detection means are provided as an integral part of the BDR to which the LNB is connected.

9. A method of reducing the power consumption of an low noise block (LNB) provided as part of a broadcast data receiving system, said method including the steps of reducing the voltage supply to the LNB in a graduated manner and, as the voltage is decreased, detecting the quality of the signal received from the LNB, continuing to decrease the voltage until a pre-defined signal quality level is reached, whereupon the voltage level is maintained.

**10.** A method according to claim 9 **characterised in that** if, during the reduction of the voltage level, the signal quality level falls below the pre-defined signal quality level, the voltage is increased until the pre-defined level is reached whereupon the voltage level is maintained.

**11.** A method according to claim 9 **characterised in that** the voltage levels is maintained until the mode of operation of the apparatus is changed.

FIG. 1